# EUROPEAN PATENT SPECIFICATION

(11) **EP 2 801 510 B1**
(45) Date of publication and mention of the grant of the patent: **20.07.2016**
(21) Application number: 13181831.2
(22) Date of filing: 27.08.2013
(51) Int. Cl.: B62D 15/02

(54) **Method, system and apparatus for unparking assiatance of a vehicle**
Verfahren, System und Vorrichtung zur Unterstützung beim Ausparken eines Fahrzeugs
Procédé, système et appareil d'assistance pour sortir un véhicule d'un stationnement

(30) Priority: 10.05.2013 KR 20130053358
(43) Date of publication of application: 12.11.2014
(73) Proprietor: Hyundai Mobis Co., Ltd., Gangnam-gu Seoul 135-977 (KR)
(72) Inventor: Shin, Ik Su, 446-912 Gyeonggi-Do (KR); Bae, Han Wook, 446-912 Gyeonggi-Do (KR); Kwon, Jae Hee, 446-912 Gyeonggi-Do (KR)
(74) Representative: dompatent von Kreisler Selting Werner - Partnerschaft von Patent- und Rechtsanwälten mbB

(56) References cited:
- US-A1- 2012 004 809
- US-A1- 2013 073 119

## Description

This application claims priority to and the benefit of Korean Patent Application No. 10-2013-0053358 filed in the Korean Intellectual Property Office on May 10, 2013.

### TECHNICAL FIELD

The present invention relates to a method and an apparatus of assisting with unparking of a vehicle and a system using the same. More particularly, the present invention relates to a method and an apparatus of assisting with unparking of a vehicle, which unpark the vehicle in consideration of obstacles around the vehicle, and a system using the same.

### BACKGROUND ART

Due to a recent increase in the number of vehicles, various social problems, such as traffic congestion and parking problems, have occurred.

In particular, for example, in the downtown area of a city, a parking has become a serious problem and due to a continuous increase in a number of vehicles, a parking space in which a vehicle may be parked has reduced.

In order to solve the deficiency in the parking space, a parking slot space which is slotted to park one vehicle is increasingly narrow.

That is, due to the deficient parking space, the case in which a vehicle is frequently parked in and unparked from a narrow space has increased and at the time of unparking a vehicle, many obstacles, such as other vehicles, are realistically present around the vehicle.

In order to assist with unparking a vehicle, there is a method or an apparatus of automatically unparking a vehicle parked in parallel or assisting with unparking the vehicle.

However, in case of a vehicle parked perpendicularly, a method or an apparatus of automatically unparking the vehicle or assisting with unparking the vehicle is insufficient.

US 2013/073119 A1 discloses an apparatus of assisting with unparking of a vehicle according to the preamble of claim 1 and a method of assisting unparking of a vehicle according to the preamble of claim 1.

### SUMMARY OF THE INVENTION

The present invention has been made in an effort to provide a method and an apparatus of assisting with unparking of a vehicle parked perpendicularly depending on obstacle conditions around the vehicle and a system using the same.

An exemplary embodiment of the present invention provides an apparatus of assisting with unparking of a vehicle, including: a receiving unit configured to receive information obtained by sensing obstacles located at the front, rear, left, and right of a vehicle parked perpendicularly which is a vehicle to be unparked; a condition determining unit configured to determine an unparking condition of the vehicle as any one of the preset conditions by using the obstacles sensing information received by the receiving unit; and a control unit configured to determine an unparking mode of the vehicle as any one of the preset unparking modes based on the condition determined by the condition determining unit and to assist with unparking of the targeted vehicle depending on the determined unparking mode.

The preset conditions may be sixteen conditions which are discriminated by whether obstacles are present at the front of the targeted vehicle, whether obstacles are present at the rear of the targeted vehicle, whether obstacles are present at the left of the targeted vehicle, and whether obstacles are present at the right of the targeted vehicle.

The preset sixteen conditions as to whether obstacles are present may be discriminated by considering as being no obstacles when the obstacles are present beyond the preset distance of the vehicle to be unparked.

The preset unparking modes may be three modes and the preset three unparking modes may be an unparking disable mode, a normal unparking mode, and a simple unparking mode.

The unparking disable mode are a mode determined in the case of any one of a condition in which obstacles are present only at the front, right, and left of the targeted vehicle and a condition in which obstacles are present at the front, rear, right, and left of the targeted vehicle.

The normal unparking mode may be a mode determined in the case of any one of a condition in which obstacles are present only at the front of the targeted vehicle, a condition in which obstacles are present only at the front and left of the targeted vehicle, a condition in which obstacles are present only at the front and right of the targeted vehicle, a condition in which obstacles are present only at the front and rear of the targeted vehicle, a condition in which obstacles are present only at the front, rear, and left of the targeted vehicle, and a condition in which obstacles are present only at the front, rear, and right of the targeted vehicle.

The simple unparking mode may be a mode determined in the case of any one of a condition in which obstacles are not present in the front, rear, left, and right of the targeted vehicle, a condition in which obstacles are present only at any one of the left, right, and rear of the targeted vehicle, a condition in which obstacles are present only at the left and right of the targeted vehicle, a condition in which obstacles are present only at the left and rear of the targeted vehicle, a condition in which obstacles are present only at the right and rear of the targeted vehicle, and a condition in which obstacles are present only at the left, right, and rear of the targeted vehicle.

Another exemplary embodiment of the present invention provides a system of assisting with unparking of a vehicle, including: a sensor configured to sense obstacles located at the front, rear, left, and right of a vehicle parked perpendicularly which is a vehicle to be unparked; and an apparatus of assisting unparking of a vehicle according to claim 1.

The preset conditions may be sixteen conditions which are discriminated by whether obstacles are present at the front of the targeted vehicle, whether obstacles are present at the rear of the targeted vehicle, whether obstacles are present at the left of the targeted vehicle, and whether obstacles are present at the right of the targeted vehicle.

The preset sixteen conditions as to whether obstacles are present may be discriminated by considering as being no obstacles when the obstacles are present beyond the preset distance of the vehicle to be unparked.

The preset unparking modes are three modes and the preset three unparking modes may be an unparking disable mode, a normal unparking mode, and a simple unparking mode.

Yet another exemplary embodiment of the present invention provides a method of assisting with unparking of a vehicle, including: receiving information obtained by sensing obstacles located at the front, rear, left, and right of a vehicle parked perpendicularly which is a vehicle to be unparked; determining an unparking condition of the vehicle as any one of the preset conditions by using the obstacles sensing information received in the receiving; and determining an unparking mode of the vhicle as any one of the preset unparking modes based on the condition determined in the determining of the unparking condition of the vehicle, and assisting with unparking of the targeted vehicle depending on the determined unparking mode.

The preset conditions may be sixteen conditions which are discriminated by whether obstacles are present at the front of the targeted vehicle, whether obstacles are present at the rear of the targeted vehicle, whether obstacles are present at the left of the targeted vehicle, and whether obstacles are present at the right of the targeted vehicle.

The preset sixteen conditions as to whether obstacles are present may be discriminated by considering as being no obstacles when the obstacles are present beyond the preset distance of the vehicle to be unparked.

The preset unparking modes are three modes and the preset three unparking modes may be an unparking disable mode, a normal unparking mode, and a simple unparking mode.

The unparking disable mode may be a mode determined in the case of any one of a condition in which obstacles are present only at the front, right, and left of the targeted vehicle and a condition in which obstacles are present at the front, rear, right, and left of the targeted vehicle.

The normal unparking mode may be a mode determined in the case of any one of a condition in which obstacles are present only at the front of the targeted vehicle, a condition in which obstacles are present only at the front and left of the targeted vehicle, a condition in which obstacles are present only at the front and right of the targeted vehicle, a condition in which obstacles are present only at the front and rear of the targeted vehicle, a condition in which obstacles are present only at the front, rear, and left of the targeted vehicle, and a condition in which obstacles are present only at the front, rear, and right of the targeted vehicle.

The simple unparking mode may be a mode determined in the case of any one of a condition in which obstacles are not present at the front, rear, left, and right of the targeted vehicle, a condition in which obstacles are present only at any one of the left, right, and rear of the targeted vehicle, a condition in which obstacles are present only at the left and right of the targeted vehicle, a condition in which obstacles are present only at the left and rear of the targeted vehicle, a condition in which obstacles are present only at the right and rear of the targeted vehicle, and a condition in which obstacles are present only at the left, right, and rear of the targeted vehicle.

According to the exemplary embodiments of the present invention, it is possible to reduce the occurrence of the fender-bender by suitably assisting with unparking a vehicle depending on the environment around the vehicle while unparking the vehicle.

According to the exemplary embodiments of the present invention, it is possible to determine whether the vehicle can be unparked, thereby safely unparking the vehicle and improving the convenience for a driver.

According to the exemplary embodiments of the present invention, it is possible to assist with the unparking of a vehicle parked perpendicularly.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a block diagram illustrating a system of assisting with unparking of a vehicle according to an exemplary embodiment of the present invention.
FIG. 2 is a block diagram illustrating an apparatus of assisting with unparking of a vehicle according to an exemplary embodiment of the present invention.
FIG. 3 is a diagram for describing preset sixteen conditions.
FIG. 4 is a flow chart illustrating a method of assisting with unparking of a vehicle according to an exemplary embodiment of the present invention.
FIG. 5 is a reference diagram for describing a simple unparking mode.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION

Hereinafter, exemplary embodiments of the present invention will be described with reference to the accompanying drawings. Hereinafter, substantially the same components are each denoted by the same reference numerals in the following description and the accompanying drawings, and therefore a repeated description thereof will be omitted. In describing the present invention, when it is determined that the detailed description of the known function or configuration related to the present invention may obscure the gist of the present invention, the detailed description thereof will be omitted.

It is to be understood that when one element is referred to as being "connected to" or "coupled to" another element, the one element may be connected directly to or coupled directly to the another element but be connected to or coupled to the another element, having another element intervening therebetween. On the other hand, it is to be understood that when one element is referred to as being "connected directly to" or "coupled directly to" another element, the one element may be connected to or coupled to the another element without another element intervening therebetween.

Unless explicitly described otherwise, a singular form may include a plural form in the present specification. The term "comprise" and/or "comprising" used in the specification will be understood to imply the inclusion of stated constituents, steps, operations and/or elements but not the exclusion of any other constituents, steps, operations and/or elements.

An apparatus and a method of assisting with unparking of a vehicle and a system of assisting with unparking of a vehicle using the same may be used to assist with unparking of a vehicle parked perpendicularly. Therefore, a vehicle to be unparked described in the present specification may be a vehicle parked perpendicularly.

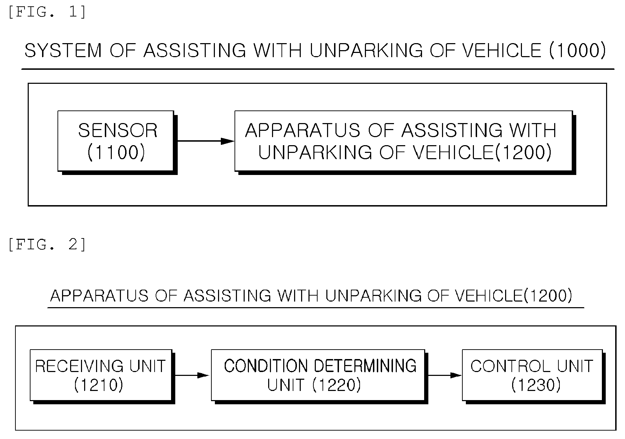

FIG. 1 is a block diagram illustrating a system of assisting with unparking of a vehicle according to an exemplary embodiment of the present invention.

Referring to FIG. 1, a system 1000 of assisting with unparking of a vehicle according to an exemplary embodiment of the present invention includes a sensor 1100 and an apparatus 1200 of assisting with unparking of a vehicle.

The sensor 1100 is installed in a vehicle to be unparked to sense obstacles which are located at the front, rear, left, and right of the targeted vehicle. The sensor 1100, such as an ultrasonic sensor 1100 and a distance sensor 1100, may be an apparatus which may sense whether objects are present and measure information on a distance between the targeted vehicle and the objects.

Obstacles may be objects which hinder a vehicle from being unparked, for example, other vehicles, a motorcycle, a wall, a pillar, and the like.

An example of obstacles sensing information collected by the sensor 1100 may include information on whether obstacles are present, a position of obstacles, and a distance of the targeted vehicle from obstacles.

The sensor 1100 is installed in a vehicle and the number of sensors 1100 may be one or more. That is, in order to sense obstacles located at the front, rear, left, and right of a vehicle, the sensor 1100 may be installed at each of the front, rear, left, and right of a vehicle, and thus a total of four sensors 1100 may be installed, but more sensors may be installed.

The apparatus 1200 of assisting with unparking of a vehicle uses the information obtained by sensing obstacles around the targeted vehicle to determine an unparking condition as any one of the preset sixteen conditions and to determine an unparking mode as any one of the preset three unparking modes based on the determined condition. The apparatus 1200 of assisting with unparking of a vehicle may assist with the unparking of the targeted vehicle depending on the determined unparking mode.

In detail, the apparatus 1200 of assisting with unparking of a vehicle will be described with reference to FIG. 2.

FIG. 2 is a block diagram illustrating an apparatus of assisting with unparking of a vehicle according to an exemplary embodiment of the present invention.

Referring to FIG. 2, the apparatus 1200 of assisting with unparking of a vehicle according to the exemplary embodiment of the present invention may include a receiving unit 1210, a condition determining unit 1220, and a control unit 1230.

The receiving unit 1210 may receive the obstacles sensing information collected by the sensor 1100.

The condition determining unit 1220 may use the obstacles sensing information to determine the unparking condition of a vehicle as any one of the preset sixteen conditions.

The preset sixteen conditions may be discriminated by whether obstacles are present at the front of the targeted vehicle, whether obstacles are present at the rear of the targeted vehicle, whether obstacles are present at the left of the targeted vehicle, and whether obstacles are present at the right of the targeted vehicle.

That is, whether obstacles are present at the front of the targeted vehicle is represented by two cases of presence/absence, and whether obstacles are present at the rear of the targeted vehicle is also represented by two cases of presence/absence. Similarly, whether obstacles are present at the right of the targeted vehicle is represented by two cases of presence/absence, and whether obstacles are present at the left of the targeted vehicle is represented by two cases of presence/absence. Therefore, the conditions, which may be represented by whether obstacles are present at the front, rear, left, and right of the targeted vehicle, are the fourth power of two cases, that is, 2 x 2 x 2 x 2, and thus the sixteen conditions.

The condition determining unit 1220 may determine a condition as to whether obstacles are present as one of the sixteen conditions, by considering as being no obstacles when the obstacles are present beyond the preset distance from the targeted vehicle. That is, the reason is that the case in which obstacles present around the targeted vehicle are apart from the targeted vehicle enough not to be considered in the trajectory of the unparking of the targeted vehicle are not substantially included in an example of obstacles. Therefore, the information on whether obstacles are present may be previously processed by using the information on the distance between the obstacles and the targeted vehicle while the sensor 1100 collects the obstacles information, and after the receiving unit 1210 receives the obstacles sensing information collected by the sensor 1100, it may also be determined whether obstacles are present within the preset distance by using the information on the distance between the targeted vehicle and the obstacles to determine whether the obstacles are present. Alternatively, the condition determining unit 1220 may use the information received by the receiving unit 1210 to determine whether the obstacles are present and whether the present obstacles are obstacles located within a preset distance, thereby determining the conditions.

The preset distance may be set depending on whether the preset distance may hinder a vehicle while the vehicle is unparked, whether the preset distance affects the generation of an unparking course of a vehicle, and the like, and may be differently set depending on a kind of vehicle, steering capability of a vehicle, a size of a vehicle, and the like.

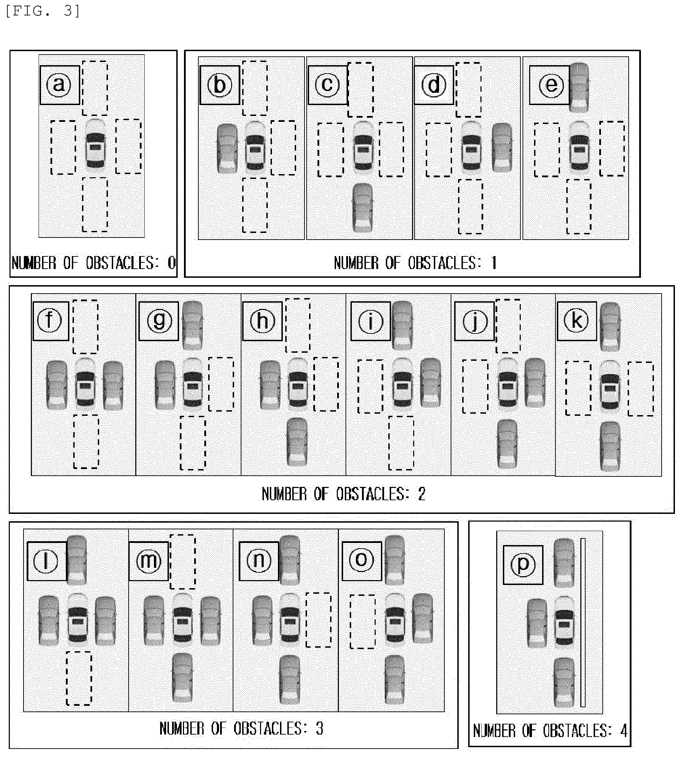

In detail, the preset sixteen conditions will be described with reference to FIG. 3.

FIG. 3 is a diagram for describing the preset sixteen conditions.

FIG. 3 illustrates a total of sixteen conditions from ⓐ to ⓟ depending on whether obstacles are present around the targeted vehicle.

The condition ⓐ is a condition in which obstacles are not present around the targeted vehicle.

The conditions ⓑ to ⓔ are a condition in which obstacles are present only at one of the front, left, right, and rear which are around the targeted vehicle.

The conditions ⓕ to ⓚ are a condition in which obstacles are present only at two of the front, left, right, and rear which are around the targeted vehicle.

The conditions ⓛ to ⓞ are a condition in which obstacles are present only at three of the front, left, right, and rear which are around the targeted vehicle.

In more detail, the condition ⓑ is a condition in which obstacles are present only at the left of the targeted vehicle, and the condition ⓒ is a condition in which obstacles are present only at the rear of the targeted vehicle. The condition ⓓ is a condition in which obstacles are only at the right of the targeted vehicle, and the condition ⓔ is a condition in which obstacles are only at the front of the targeted vehicle.

The condition ⓕ is a condition in which obstacles are present only at the left and right of the targeted vehicle, and the condition ⓖ is a condition in which obstacles are present only in the left and front of the targeted vehicle. The condition ⓗ is a condition in which obstacles are present only at the left and rear of the targeted vehicle, and the condition ⓘ is a condition in which obstacles are present only at the front and right of the targeted vehicle. The condition ⓙ is a condition in which obstacles are present only at the right and rear of the targeted vehicle, and the condition ⓚ is a condition in which obstacles are present only at the front and rear of the targeted vehicle.

The condition ⓛ is a condition in which obstacles are present only at the front, left, and right of the targeted vehicle, and the condition ⓜ is a condition in which obstacles are present only at the left, right, and rear of the targeted vehicle. The condition ⓝ is a condition in which obstacles are present only at the front, left, and rear of the targeted vehicle, and the condition ⓞ is a condition in which obstacles are present only at the front, right, and rear of the targeted vehicle.

The condition ⓟ is a condition in which obstacles are present all around the targeted vehicle, that is, at the front, left, right, and rear of the targeted vehicle.

When the condition determining unit 1220 determines an unparking condition of the vehicle as any one of the sixteen conditions depending on whether obstacles are present around the targeted vehicle, the control unit 1230 determines an unparking mode of the vehicle as any one of the preset three unparking modes based on the determined condition and may assist with the unparking of the vehicle depending on the determined unparking mode.

In detail, the preset three unparking modes may be an unparking disable mode, a normal unparking mode, and a simple unparking mode.

In detail, when the unparking is disabled due to the obstacles around the targeted vehicle, the control unit 1230 may determine an unparking mode as the unparking disable mode and may control the vehicle to be prevented from being unparked even though a driver forcibly attempts to unpark the vehicle.

Since the unparking is disabled due to obstacles around the targeted vehicle, the case in which the control unit 1230 determines the unparking mode as the unparking disable mode will be described in detail.

When the condition determined by the condition determining unit 1220 is the condition ⓛ or the condition ⓟ, the control unit 1230 may determine the unparking mode as the unparking disable mode. Therefore, when the conditions determined by the condition determining unit 1220 are the condition ⓛ or the condition ⓟ, the control unit 1230 may control the vehicle to be prevented from being unparked.

The normal unparking mode means to assist with the parking of the vehicle depending on a normal unparking process set in the control unit 1230. Describing an example of the normal unparking process set in the control unit 1230, when a driver operates the system 1000 of assisting with unparking of a vehicle, the control unit 1230 may determine the normal unparking mode depending on the condition determined by the condition determining unit 1220. When the driver puts a gear in reverse, the control unit 1230 may automatically control a steering wheel of the vehicle. The driver may control a speed using an accelerator and a brake while the control unit 1230 controls the steering wheel. When obstacles close to the targeted vehicle are sensed at the rear of the targeted vehicle while the targeted vehicle moves so as to be unparked, the control unit 1230 may request the driver to put a gear into drive or may control a gear transmission to automatically be a gear to drive. After the driver puts a gear to drive, the control unit 1230 may control the steering wheel and the driver may control a speed using an accelerator and a brake. When obstacles close to the front of the targeted vehicle are present while the targeted vehicle moves forward so as to be unparked, the control unit 1230 may request a driver to put a gear in reverse or may control a gear transmission to automatically be a gear in reverse. The control unit 1230 may repeatedly perform the process until the conditions for unparking the targeted vehicle are satisfied.

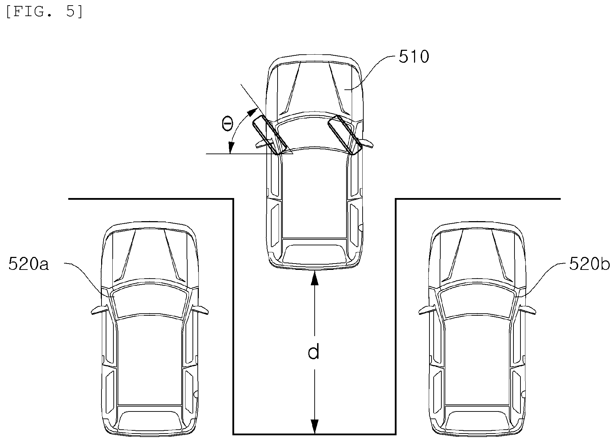

As illustrated in FIG. 5, the simple unparking mode is a mode of assisting with unparking of a vehicle which allows a control unit of a first vehicle 510 to control the steering wheel in a direction in which a vehicle is unparked, and ends when a wheel rotating angle θ of the first vehicle 510 is determined.

However, when the first vehicle 510 moves forward by a short distance and then turns left or right by the angle θ, an accident that the first vehicle collides with a second vehicle 520a or a third vehicle 520b may occur. Therefore, according to the exemplary embodiment of the present invention, the simple unparking mode may end after the control unit of the first vehicle 510 determines the angle θ as well as a forward moving distance d of a vehicle in an unparking direction. In this case, the distance d may have a value enough to prevent the first vehicle 510 from colliding with the second vehicle 520a or the third vehicle 520b even though the first vehicle 510 fully turns left or right in order to further lower the collision risk.

When a driver operates the system 1000 of assisting with unparking of a vehicle, the control unit 1230 may also control the steering wheel as well as the accelerator and the brake of the vehicle so as to be a speed suitable to unpark the vehicle.

In detail, the case in which the control unit 1230 determines the unparking mode as the normal unparking mode may be the case in which the condition determined by the condition determining unit 1220 is any one of the conditions ⓔ, ⓖ, ⓘ, ⓚ, ⓝ, and ⓞ.

The case in which the control unit 1230 determines the unparking mode as the simple unparking mode may be the case in which the condition determined by the condition determining unit 1220 is any one of the conditions ⓐ, ⓑ, ⓒ, ⓓ, ⓕ, ⓗ, ⓙ, and ⓜ.

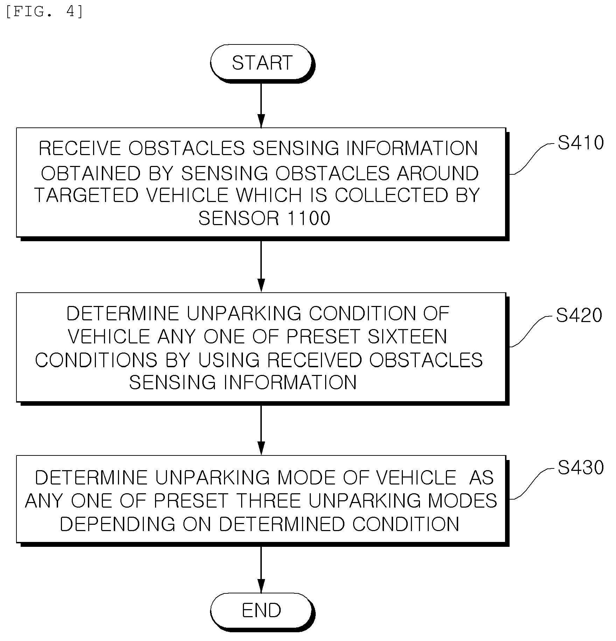

FIG. 4 is a flow chart illustrating a method of assisting with unparking of a vehicle according to an exemplary embodiment of the present invention.

The method of assisting with unparking of a vehicle according to an exemplary embodiment of the present invention will be described with reference to FIG. 4.

The receiving unit 1201 receives the obstacles sensing information obtained by sensing the obstacles around the targeted vehicle, which is collected by the sensor 110 (step S410).

The condition determining unit 1220 uses the obstacles sensing information received by the receiving unit 1210 to determine the unparking condition as any one of the preset sixteen conditions (step S420).

The control unit 1230 determines an unparking mode as any one of the preset three unparking modes based on the condition determined by the condition determining unit 1220 (step S430).

The apparatus and the method of assisting with unparking of a vehicle and the system of assisting with unparking of a vehicle using the same according to the exemplary embodiment of the present invention may reduce the occurrence of a fender-bender by suitably assisting with the unparking of the vehicle depending on the environment around the vehicle during the unparking of the vehicle.

The apparatus and the method of assisting with unparking of a vehicle and the system of assisting with unparking of a vehicle using the same according to the exemplary embodiment of the present invention may determine whether the vehicle may be unparked, such that the vehicle may be safely unparked and the convenience of a driver may be improved.

The apparatus and the method of assisting with unparking of a vehicle and the system of assisting with unparking of a vehicle using the same according to the exemplary embodiment of the present invention may assist with the unparking of a vehicle parked perpendicularly.

It is to be understood that block diagrams of the system 1000 of assisting with unparking of a vehicle and the apparatus 1200 of assisting with unparking of a vehicle according to the exemplary embodiment of the present invention illustrate an exemplarily conceptual aspect embodying a principle of the present invention. Similarly, it is to be understood that all the flow charts may be substantially represented in a computer readable medium and represent various processes executed by a computer or a processor regardless of whether the computer or the processor is clearly illustrated in the drawings.

Functions of a processor or various elements shown in the drawings including functional blocks represented as a concept similar thereto may be provided by using dedicated hardware and hardware with ability for executing software in connection with appropriate software. When the functions are provided by the processor, the functions may be provided by a single dedicated processor, a single sharing processor, or a plurality of individual processors and some thereof can be shared.

Terms presented as a processor, control, or a concept similar thereto are not construed as exclusively including hardware having ability for executing software and are to be construed as implicitly including digital signal processor (DSP) hardware and ROM, RAM, and nonvolatile memory for storing software. Other well-known hardware may also be included.

As described above, the exemplary embodiments have been described and illustrated in the drawings and the specification. The exemplary embodiments were chosen and described in order to explain certain principles of the invention and their practical application, to thereby enable others skilled in the art to make and utilize various exemplary embodiments of the present invention, as well as various alternatives and modifications thereof. As is evident from the foregoing description, certain aspects of the present invention are not limited by the particular details of the examples illustrated herein, and it is therefore contemplated that other modifications and applications, or equivalents thereof, will occur to those skilled in the art. Many changes, modifications, variations and other uses and applications of the present construction will, however, become apparent to those skilled in the art after considering the specification and the accompanying drawings. All such changes, modifications, variations and other uses and applications which do not depart from the scope of the invention are deemed to be covered by the invention which is limited only by the claims which follow.

## Claims

1. An apparatus (1200) of assisting with unparking of a vehicle, comprising:
a receiving unit (1210) configured to receive information obtained by sensing obstacles located at the front, rear, left, and right of a vehicle parked perpendicularly which is a vehicle to be unparked;
a condition determining unit (1220) configured to determine an unparking condition of the vehicle as any one of the preset conditions by using obstacles sensing information received by the receiving unit (1210); and
a control unit (1230) configured to determine an unparking mode of the vehicle as any one of the preset unparking modes based on the condition determined by the condition determining unit (1220) and to assist with unparking of the targeted vehicle depending on the determined unparking mode,
**characterized in that**
the preset unparking modes are three modes, and the preset three unparking modes are an unparking disable mode, a normal unparking mode, and a simple unparking mode.

2. The apparatus of claim 1, wherein the preset conditions are sixteen conditions which are discriminated by whether obstacles are present at front of the targeted vehicle, whether obstacles are present at the rear of the targeted vehicle, whether obstacles are present at the left of the targeted vehicle, and whether obstacles are present at the right of the targeted vehicle.

3. The apparatus of claim 2, wherein the preset sixteen conditions as to whether obstacles are present is discriminated by considering as being no obstacles when the obstacles are present beyond the preset distance of the vehicle to be unparked.

4. The apparatus of claim 1, wherein the unparking disable mode is a mode determined in the case of any one of
a condition in which obstacles are present only at the front, right, and left of the targeted vehicle and
a condition in which obstacles are present at the front, rear, right, and left of the targeted vehicle.

5. The apparatus of claim 1, wherein the normal unparking mode is a mode determined in the case of any one of
a condition in which obstacles are present only at the front of the targeted vehicle,
a condition in which obstacles are present only at the front and left of the targeted vehicle,
a condition in which obstacles are present only at the front and right of the targeted vehicle,
a condition in which obstacles are present only at the front and rear of the targeted vehicle,
a condition in which obstacles are present only at the front, rear, and left of the targeted vehicle, and
a condition in which obstacles are present only at the front, rear, and right of the targeted vehicle.

6. The apparatus of claim 1, wherein the simple unparking mode is a mode determined in the case of any one of
a condition in which obstacles are not present at the front, rear, left, and right of the targeted vehicle,
a condition in which obstacles are present only at any one of the left, right, and rear of the targeted vehicle,
a condition in which obstacles are present only at the left and right of the targeted vehicle,
a condition in which obstacles are present only at the left and rear of the targeted vehicle,
a condition in which obstacles are present only at the right and rear of the targeted vehicle, and
a condition in which obstacles are present only at the left, right, and rear of the targeted vehicle.

7. A system (1000) of assisting with unparking of a vehicle, comprising:
a sensor (1100) configured to sense obstacles located at the front, rear, left, and right of a vehicle parked perpendicularly which is a vehicle to be unparked; and
an apparatus (1200) of assisting with unparking of a vehicle according to claim 1.

8. The system of claim 7, wherein the preset conditions are sixteen conditions which are discriminated by whether obstacles are present at the front of the targeted vehicle, whether obstacles are present at the rear of the targeted vehicle, whether obstacles are present at the left of the targeted vehicle, and whether obstacles are present at the right of the targeted vehicle.

9. The system of claim 8, wherein the preset sixteen conditions as to whether obstacles are present may be discriminated by considering as being no obstacles when the obstacles are present beyond the preset distance of the vehicle to be unparked.

10. The system of claim 7, wherein the preset unparking modes are three modes, and
the preset three unparking modes are an unparking disable mode, a normal unparking mode, and a simple unparking mode.

11. A method of assisting with unparking of a vehicle, comprising:
receiving information obtained by sensing obstacles located at the front, rear, left, and right of a vehicle parked perpendicularly which is a vehicle to be unparked;
determining an unparking condition of the vehicle as any one of the preset conditions by using the obstacles sensing information received in the receiving; and
determining an unparking mode of the vehicle as any one of the preset unparking modes based on the condition determined in the determining of the unparking condition of the vehicle, and assisting with unparking of the targeted vehicle depending on the determined unparking mode,
**characterized in that**
the preset unparking modes are three modes, and the preset three unparking modes are an unparking disable mode, a normal unparking mode, and a simple unparking mode.

12. The method of claim 11, wherein the preset conditions are sixteen conditions which are discriminated by whether obstacles are present at front of the targeted vehicle, whether obstacles are present at the rear of the targeted vehicle, whether obstacles are present at the left of the targeted vehicle, and whether obstacles are present at the right of the targeted vehicle.

13. The method of claim 11, wherein the normal unparking mode is a mode determined in the case of any one of
a condition in which obstacles are present at the front of the targeted vehicle,
a condition in which obstacles are present only at the front and left of the targeted vehicle,
a condition in which obstacles are present only at the front and right of the targeted vehicle,
a condition in which obstacles are present only at the front and rear of the targeted vehicle,
a condition in which obstacles are present only at the front, rear, and left of the targeted vehicle, and
a condition in which obstacles are present only at the front, rear, and right of the targeted vehicle,
wherein the simple unparking mode is a mode determined in the case of any one of
a condition in which obstacles are not present at the front, rear, left, and right of the targeted vehicle,
a condition in which obstacles are present only at any one of the left, right, and rear of the targeted vehicle,
a condition in which obstacles are present only at the left and right of the targeted vehicle,
a condition in which obstacles are present only at the left and rear of the targeted vehicle,
a condition in which obstacles are present only at the right and rear of the targeted vehicle, and
a condition in which obstacles are present only at the left, right, and rear of the targeted vehicle.

## Patentansprüche

1. Vorrichtung (1200) zur Unterstützung beim Ausparken eines Fahrzeugs, mit:
einer Empfängereinheit (1210), die zum Empfangen von Informationen ausgebildet ist, welche durch das Erfassen von Hindernissen vor, hinter, links und rechts von einem senkrecht eingeparkten Fahrzeug erhalten werden, bei welchem es sich um ein auszuparkendes Fahrzeug handelt;
einer Zustandsbestimmungseinheit (1220), die dazu ausgebildet ist, einen Ausparkzustand des Fahrzeugs als einen Zustand von voreingestellten Zuständen durch Verwenden von durch die Empfängereinheit (1210) empfangenen Hinderniserfassungsinformationen zu bestimmen; und
einer Steuereinheit (1230), die dazu ausgebildet ist, einen Ausparkmodus des Fahrzeugs als einen Modus von voreingestellten Ausparkmodi auf der Grundlage des von der Zustandsbestimmungseinheit (1220) bestimmten Zustands zu bestimmen, und das Ausparken des Zielfahrzeugs in Abhängigkeit von dem bestimmten Ausparkmodus zu unterstützen,
**dadurch gekennzeichnet, dass**
die voreingestellten Ausparkmodi drei Modi sind, und
die voreingestellten drei Ausparkmodi ein Ausparksperrmodus, ein normaler Ausparkmodus und ein einfacher Ausparkmodus sind.

2. Vorrichtung nach Anspruch 1, bei welcher die voreingestellten Zustände sechzehn Zustände sind, welche dadurch unterschieden werden, ob Hindernisse vor dem Zielfahrzeug vorhanden sind, ob Hindernisse hinter dem Zielfahrzeug vorhanden sind, ob Hindernisse links von dem Zielfahrzeug vorhanden sind, und ob Hindernisse rechts von dem Zielfahrzeug vorhanden sind.

3. Vorrichtung nach Anspruch 2, bei welcher die voreingestellten sechzehn Zustände bezüglich des Vorhandenseins von Hindernissen unterschieden werden, indem die Abwesenheit von Hindernissen angenommen wird, wenn Hindernisse jenseits einer voreingestellten Entfernung zu dem auszuparkenden Fahrzeug vorhanden sind.

4. Vorrichtung nach Anspruch 1, bei welcher der Ausparksperrmodus ein Modus ist, der in einem der folgenden Fälle bestimmt wird:
bei einem Zustand, in welchem Hindernisse nur vor, rechts und links von dem Zielfahrzeug vorhanden sind, und
in einem Zustand, in welchem Hindernisse vor, hinter, rechts und links von dem Zielfahrzeug vorhanden sind.

5. Vorrichtung nach Anspruch 1, bei welcher der normale Ausparkmodus ein Modus ist, der in einem der folgenden Fälle bestimmt wird:
in einem Zustand, in welchem Hindernisse nur vor dem Zielfahrzeug vorhanden sind,
in einem Zustand, in welchem Hindernisse nur vor und links von dem Zielfahrzeug vorhanden sind,
in einem Zustand, in welchem Hindernisse nur vor und rechts von dem Zielfahrzeug vorhanden sind,
in einem Zustand, in welchem Hindernisse nur vor und hinter dem Zielfahrzeug vorhanden sind,
in einem Zustand, in welchem Hindernisse nur vor, hinter und links von dem Zielfahrzeug vorhanden sind, und
in einem Zustand, in welchem Hindernisse nur vor, hinter, links und rechts von dem Zielfahrzeug vorhanden sind.

6. Vorrichtung nach Anspruch 1, bei welcher der einfache Ausparkmodus ein Modus ist, der in einem der folgenden Fälle bestimmt wird:
in einem Zustand, in welchem keine Hindernisse vor, hinter, links und rechts von dem Zielfahrzeug vorhanden sind,
in einem Zustand, in welchem Hindernisse nur entweder links, rechts oder hinter dem Zielfahrzeug vorhanden sind,
in einem Zustand, in welchem Hindernisse nur links und rechts von dem Zielfahrzeug vorhanden sind,
in einem Zustand, in welchem Hindernisse nur links und hinter dem Zielfahrzeug vorhanden sind,
in einem Zustand, in welchem Hindernisse nur rechts und hinter dem Zielfahrzeug vorhanden sind, und
in einem Zustand, in welchem Hindernisse nur links, rechts und hinter dem Zielfahrzeug vorhanden sind.

7. System (1000) zum Unterstützen des Ausparkens eines Fahrzeugs, mit:
einem Sensor (1100), der zum Erfassen von Hindernissen vor, hinter, links und rechts von einem senkrecht eingeparkten Fahrzeug ausgebildet ist, bei welchem es sich um ein auszuparkendes Fahrzeug handelt; und
einer Vorrichtung (1200) zur Unterstützung des Ausparkens eines Fahrzeugs nach Anspruch 1.

8. System nach Anspruch 7, bei welchem die voreingestellten Zustände sechzehn Zustände sind, welche dadurch unterschieden werden, ob Hindernisse vor dem Zielfahrzeug vorhanden sind, ob Hindernisse hinter dem Zielfahrzeug vorhanden sind, ob Hindernisse links von dem Zielfahrzeug vorhanden sind, und ob Hindernisse rechts von dem Zielfahrzeug vorhanden sind.

9. System nach Anspruch 8, bei welchem die voreingestellten sechzehn Zustände bezüglich des Vorhandenseins von Hindernissen unterschieden werden, indem die Abwesenheit von Hindernissen angenommen wird, wenn Hindernisse jenseits einer voreingestellten Entfernung zu dem auszuparkenden Fahrzeug vorhanden sind.

10. System nach Anspruch 7, bei welchem die voreingestellten Ausparkmodi drei Modi sind, und
die voreingestellten drei Ausparkmodi ein Ausparksperrmodus, ein normaler Ausparkmodus und ein einfacher Ausparkmodus sind.

11. Verfahren zur Unterstützung des Ausparkens eines Fahrzeugs mit den folgenden Schritten:
Empfangen von Informationen, welche durch das Erfassen von Hindernissen vor, hinter, links und rechts von einem senkrecht eingeparkten Fahrzeug erhalten werden, bei welchem es sich um ein auszuparkendes Fahrzeug handelt;
Bestimmen eines Ausparkzustands des Fahrzeugs als einen Zustand von voreingestellten Zuständen durch Verwenden von durch die Empfängereinheit empfangenen Hinderniserfassungsinformationen; und
Bestimmen eines Ausparkmodus des Fahrzeugs als einen Modus von voreingestellten Ausparkmodi auf der Grundlage des bei der Zustandsbestimmung bestimmten Zustands, und Unterstützen des Ausparkens des Zielfahrzeugs in Abhängigkeit von dem bestimmten Ausparkmodus,
**dadurch gekennzeichnet, dass**
die voreingestellten Ausparkmodi drei Modi sind, und
die voreingestellten drei Ausparkmodi ein Ausparksperrmodus, ein normaler Ausparkmodus und ein einfacher Ausparkmodus sind.

12. Verfahren nach Anspruch 11, bei welchem die voreingestellten Zustände sechzehn Zustände sind, welche dadurch unterschieden werden, ob Hindernisse vor dem Zielfahrzeug vorhanden sind, ob Hindernisse hinter dem Zielfahrzeug vorhanden sind, ob Hindernisse links von dem Zielfahrzeug vorhanden sind, und ob Hindernisse rechts von dem Zielfahrzeug vorhanden sind.

13. Verfahren nach Anspruch 11, bei welchem der normale Ausparkmodus ein Modus ist, der in einem der folgenden Fälle bestimmt wird:
in einem Zustand, in welchem Hindernisse vor dem Zielfahrzeug vorhanden sind,
in einem Zustand, in welchem Hindernisse nur vor und links von dem Zielfahrzeug vorhanden sind,
in einem Zustand, in welchem Hindernisse nur vor und rechts von dem Zielfahrzeug vorhanden sind,
in einem Zustand, in welchem Hindernisse nur vor und hinter dem Zielfahrzeug vorhanden sind,
in einem Zustand, in welchem Hindernisse nur vor, hinter und links von dem Zielfahrzeug vorhanden sind, und
in einem Zustand, in welchem Hindernisse nur vor, hinter und rechts von dem Zielfahrzeug vorhanden sind,
wobei der einfache Ausparkmodus ein Modus ist, der in einem der folgenden Fälle bestimmt wird:
in einem Zustand, in welchem keine Hindernisse vor, hinter, links und rechts von dem Zielfahrzeug vorhanden sind,
in einem Zustand, in welchem Hindernisse nur entweder links, rechts oder hinter dem Zielfahrzeug vorhanden sind,
in einem Zustand, in welchem Hindernisse nur links und rechts von dem Zielfahrzeug vorhanden sind,
in einem Zustand, in welchem Hindernisse nur links und hinter dem Zielfahrzeug vorhanden sind,
in einem Zustand, in welchem Hindernisse nur rechts und hinter dem Zielfahrzeug vorhanden sind, und
in einem Zustand, in welchem Hindernisse nur links, rechts und hinter dem Zielfahrzeug vorhanden sind.

## Revendications

1. Appareil (1200) d'assistance à la sortie de stationnement d'un véhicule, comprenant :
une unité de réception (1210) configurée de façon à recevoir une information obtenue par la détection d'obstacles situés à l'avant, à l'arrière, à gauche et à droite d'un véhicule stationné perpendiculairement, qui est un véhicule qui doit être sorti de stationnement ;
une unité de détermination de condition (1220) configurée de façon à déterminer une condition de sortie de stationnement du véhicule comme étant l'une quelconque des conditions pré-établies à l'aide d'une information de détection d'obstacles reçue par l'unité de réception (1210) ; et
une unité de commande (1230) configurée de façon à déterminer un mode de sortie de stationnement du véhicule comme étant l'un quelconque des modes de sortie de stationnement pré-établis en fonction de la condition déterminée par l'unité de détermination de condition (1220) et à assister la sortie de stationnement du véhicule ciblé en fonction du mode de sortie de stationnement déterminé,
**caractérisé en ce que** les modes de sortie de stationnement préétablis sont trois modes, et
les trois modes de sortie de stationnement pré-établis sont un mode d'invalidation de sortie de stationnement, un mode de sortie de stationnement normal, et un mode de sortie de stationnement simple.

2. Appareil selon la revendication 1, dans lequel les conditions préétablies sont seize conditions qui sont discriminées par le fait que des obstacles sont ou non présents à l'avant du véhicule ciblé, que des obstacles sont ou non présents à l'arrière du véhicule ciblé, que des obstacles sont ou non présents à gauche du véhicule ciblé, et que des obstacles sont ou non présents à droite du véhicule ciblé.

3. Appareil selon la revendication 2, dans lequel les seize conditions pré-établies, concernant le fait que des obstacles sont ou non présents, sont discriminées par le fait de considérer qu'il n'y a pas d'obstacles lorsque les obstacles sont présents au-delà de la distance pré-établie du véhicule qui doit être sorti de stationnement.

4. Appareil selon la revendication 1, dans lequel le mode d'invalidation de sortie de stationnement est un mode déterminé dans le cas de l'une quelconque parmi :
une condition dans laquelle des obstacles ne sont présents qu'à l'avant, à droite et à gauche du véhicule ciblé, et
une condition dans laquelle des obstacles sont présents à l'avant, à l'arrière, à droite et à gauche du véhicule ciblé.

5. Appareil selon la revendication 1, dans lequel le mode de sortie de stationnement normal est un mode déterminé dans le cas de l'une quelconque parmi :
une condition dans laquelle des obstacles ne sont présents qu'à l'avant du véhicule ciblé,
une condition dans laquelle des obstacles ne sont présents qu'à l'avant et à gauche du véhicule ciblé,
une condition dans laquelle des obstacles ne sont présents qu'à l'avant et à droite du véhicule ciblé,
une condition dans laquelle des obstacles ne sont présents qu'à l'avant et à l'arrière du véhicule ciblé,
une condition dans laquelle des obstacles ne sont présents qu'à l'avant, à l'arrière et à gauche du véhicule ciblé, et
une condition dans laquelle des obstacles ne sont présents qu'à l'avant, à l'arrière et à droite du véhicule ciblé.

6. Appareil selon la revendication 1, dans lequel le mode de sortie de stationnement simple est un mode déterminé dans le cas de l'une quelconque parmi :
une condition dans laquelle des obstacles ne sont pas présents à l'avant, à l'arrière, à gauche et à droite du véhicule ciblé,
une condition dans laquelle des obstacles ne sont présents qu'à l'un quelconque de la gauche, de la droite et de l'arrière du véhicule ciblé,
une condition dans laquelle des obstacles ne sont présents qu'à gauche et à droite du véhicule ciblé,
une condition dans laquelle des obstacles ne sont présents qu'à gauche et à l'arrière du véhicule ciblé,
une condition dans laquelle des obstacles ne sont présents qu'à droite et à l'arrière du véhicule ciblé, et
une condition dans laquelle des obstacles ne sont présents qu'à gauche, à droite et à l'arrière du véhicule ciblé.

7. Système (1000) d'assistance à la sortie de stationnement d'un véhicule, comprenant :
un capteur (1100) configuré de façon à détecter des obstacles situés à l'avant, à l'arrière, à gauche et à droite d'un véhicule stationné perpendiculairement, qui est un véhicule qui doit être sorti de stationnement ; et
un appareil (1200) d'assistance à la sortie de stationnement d'un véhicule selon la revendication 1.

8. Système selon la revendication 7, dans lequel les conditions préétablies sont seize conditions qui sont discriminées par le fait que des obstacles sont ou non présents à l'avant du véhicule ciblé, que des obstacles sont ou non présents à l'arrière du véhicule ciblé, que des obstacles sont ou non présents à gauche du véhicule ciblé, et que des obstacles sont ou non présents à droite du véhicule ciblé.

9. Système selon la revendication 8, dans lequel les seize conditions pré-établies, concernant le fait que des obstacles sont ou non présents, peuvent être discriminées par le fait de considérer qu'il n'y a pas d'obstacles lorsque les obstacles sont présents au-delà de la distance préétablie du véhicule qui doit être sorti de stationnement.

10. Système selon la revendication 7, dans lequel les modes de sortie de stationnement pré-établis sont trois modes, et
les trois modes de sortie de stationnement pré-établis sont un mode d'invalidation de sortie de stationnement, un mode de sortie de stationnement normal, et un mode de sortie de stationnement simple.

11. Procédé d'assistance à la sortie de stationnement d'un véhicule, comprenant :
la réception d'une information obtenue par la détection d'obstacles situés à l'avant, à l'arrière, à gauche et à droite d'un véhicule stationné perpendiculairement, qui est un véhicule qui doit être sorti de stationnement ;
la détermination d'une condition de sortie de stationnement du véhicule comme étant l'une quelconque des conditions pré-établies à l'aide de l'information de détection d'obstacles reçue lors de la réception ; et
la détermination d'un mode de sortie de stationnement du véhicule comme étant l'un quelconque des modes de sortie de stationnement préétablis en fonction de la condition déterminée lors de la détermination de la condition de sortie de stationnement du véhicule, et l'assistance à la sortie de stationnement du véhicule ciblé en fonction du mode de sortie de stationnement déterminé,
**caractérisé en ce que** les modes de sortie de stationnement préétablis sont trois modes, et
les trois modes de sortie de stationnement pré-établis sont un mode d'invalidation de sortie de stationnement, un mode de sortie de stationnement normal, et un mode de sortie de stationnement simple.

12. Procédé selon la revendication 11, dans lequel les conditions pré-établies sont seize conditions qui sont discriminées par le fait que des obstacles sont ou non présents à l'avant du véhicule ciblé, que des obstacles sont ou non présents à l'arrière du véhicule ciblé, que des obstacles sont ou non présents à gauche du véhicule ciblé, et que des obstacles sont ou non présents à droite du véhicule ciblé.

13. Procédé selon la revendication 11, dans lequel le mode de sortie de stationnement normal est un mode déterminé dans le cas de l'une quelconque parmi :
une condition dans laquelle des obstacles sont présents à l'avant du véhicule ciblé,
une condition dans laquelle des obstacles ne sont présents qu'à l'avant et à gauche du véhicule ciblé,
une condition dans laquelle des obstacles ne sont présents qu'à l'avant et à droite du véhicule ciblé,
une condition dans laquelle des obstacles ne sont présents qu'à l'avant et à l'arrière du véhicule ciblé,
une condition dans laquelle des obstacles ne sont présents qu'à l'avant, à l'arrière et à gauche du véhicule ciblé, et
une condition dans laquelle des obstacles ne sont présents qu'à l'avant, à l'arrière et à droite du véhicule ciblé,
dans lequel le mode de sortie de stationnement simple est un mode déterminé dans le cas de l'une quelconque parmi :
une condition dans laquelle des obstacles ne sont pas présents à l'avant, à l'arrière, à gauche et à droite du véhicule ciblé,
une condition dans laquelle des obstacles ne sont présents qu'à l'un quelconque de la gauche, de la droite et de l'arrière du véhicule ciblé,
une condition dans laquelle des obstacles ne sont présents qu'à gauche et à droite du véhicule ciblé,
une condition dans laquelle des obstacles ne sont présents qu'à gauche et à l'arrière du véhicule ciblé,
une condition dans laquelle des obstacles ne sont présents qu'à droite et à l'arrière du véhicule ciblé, et
une condition dans laquelle des obstacles ne sont présents qu'à gauche, à droite et à l'arrière du véhicule ciblé.
